# EUROPÄISCHE PATENTSCHRIFT

(11) **EP 3 814 859 B1**
(45) Veröffentlichungstag und Bekanntmachung des Hinweises auf die Patenterteilung: **25.10.2023**
(21) Anmeldenummer: 19761797.0
(22) Anmeldetag: 27.08.2019
(51) Int. Cl.: H04L 9/40

(54) **VORRICHTUNG ZUR DATENSICHEREN ANBINDUNG MINDESTENS EINER HERSTELLMASCHINE**
DEVICE FOR LINKING AT LEAST ONE PRODUCTION MACHINE IN A DATA-SECURED MANNER
DISPOSITIF DE CONNEXION SÉCURISÉE DE DONNÉES D'AU MOINS UNE MACHINE DE FABRICATION

(30) Priorität: 05.09.2018 DE 102018007004
(43) Veröffentlichungstag der Anmeldung: 05.05.2021
(73) Patentinhaber: Rommelag Ilabs GmbH, 74429 Sulzbach-Laufen (DE)
(72) Erfinder: HANSEN, Gert, 76571 Gaggenau (DE); JAKOB, Helmut, 76275 Ettlingen (DE)
(74) Vertreter: Bartels und Partner, Patentanwälte
(86) Internationale Anmeldenummer: PCT/EP2019/072750
(87) Internationale Veröffentlichungsnummer: WO 2020/048815

(56) Entgegenhaltungen:
- DE-A1-102017 124 821
- US-A1- 2002 112 181
- "Chapter 7: Establishing Secure Enclaves; Chapter 8: Exception, Anomaly, and Threat Detection; Chapter 9: Monitoring Enclaves ED - Eric D Knapp", 1. Januar 2011 (2011-01-01), INDUSTRIAL NETWORK SECURITY. SECURING CRITICAL INFRASTRUCTURE NETWORKS FOR SMART GRID, SCADA, AND OTHER INDURSTIAL CONTROL SYSTEMS, SYNGRESS, PAGE(S) 147 - 247, XP002687973, ISBN: 978-1-59749-645-2 Seite 147 - Seite 152 Seite 160 Seite 163 Seite 181, Absatz 3 - Seite 182, letzter Absatz
- Miao Yiyi: "How Unidirectional Networks Are Used in Industrial Control Systems - OPSWAT", , 15 July 2015 (2015-07-15), pages 1-7, XP055949043, Retrieved from the Internet: URL:https://www.opswat.com/blog/how-unidir ectional-networks-are-used-industrial-cont rol-systems [retrieved on 2022-08-04]

## Beschreibung

Die Erfindung betrifft eine Vorrichtung zur datensicheren Anbindung mindestens einer Herstellmaschine sowie eine Herstellmaschine mit einer solchen Vorrichtung und eine Industrieanlage mit mehreren derartigen Herstellmaschinen.

Ein Einbinden von Herstellmaschinen in einen betrieblichen Ablauf erfolgt in Produktionsbetrieben regelmäßig unter Zuhilfenahme der aus dem Stand der Technik bekannten, in verschiedene Ebenen unterteilten "Automatisierungspyramide", die eine Informationsübertragung ausschließlich in Vertikalrichtung ihrer Ebenen zulässt, wobei ein Informationsaustausch zu externen Dienstleistern über die höchste Ebene der Pyramide erfolgt, nämlich über die Unternehmensebene (Enterprise-Resource-Planning, ERP). Im Zuge von "Industrie 4.0" wird jedoch zusehends eine direkte Anbindung von Herstellmaschinen an externe Datenverarbeitungseinrichtungen, wie beispielsweise Rechner einer Cloud (Cloud Computing) oder, hinsichtlich des die Maschine betreibenden Unternehmens, an Rechner anderer Unternehmen, auf der jeweiligen Ebene der Automatisierungspyramide in Horizontalrichtung gewünscht, ohne einen Einbezug weiterer Ebenen der Pyramide. Bei einer solchen direkten Anbindung einer Herstellmaschine an eine externe Datenverarbeitungseinrichtung sind jedoch Mittel zur Absicherung der Herstellmaschine vor Zugriffen von dritter Seite aus auf diese vorzusehen.

Aus der US 2015/0106912 A1 ist eine Vorrichtung zur datensicheren Anbindung zumindest einer Herstellmaschine an einen, bezüglich der Herstellmaschine und bezüglich des die Herstellmaschine betreibenden Unternehmens, externen Datenserver bekannt, mit einem Controller, der als integraler Bestandteil der Herstellmaschine ausgebildet ist und auf dem Software zur Datenverarbeitung der Maschinendaten der Herstellmaschine, insbesondere zur Pufferung, Weiterleitung und/oder Komprimierung, implementiert ist und der über eine, bezüglich der Herstellmaschine, externe Firewall mit einem Maschinen-Netzwerk verbunden ist, in dem mehrere Herstellmaschinen vorgesehen sind, das über eine weitere, bezüglich der jeweiligen Herstellmaschine, externe Firewall mit dem firmenexternen Datenserver verbunden ist, der mit dem Internet verbunden ist.

Eine Zugriffskontrolle auf den Controller der Herstellmaschine, für einen Remote-Service über das Internet zur Fehlerbehebung durch einen Experten, ist in einem Ausführungsbeispiel durch eine Verschlüsselung und in einem weiteren Ausführungsbeispiel durch ein Hochladen der Maschinendaten von dem Controller, ohne einen Datenrückfluss, ausschließlich in Richtung zu dem firmenexternen Rechner des Experten implementiert, wobei das Hochladen von Daten die Übertragung von Daten von einem lokalen Rechner bzw. Speichermedium zu einem von dem lokalen Rechner bzw. Speichermedium entfernt angeordneten Rechner bzw. Speichermedium bezeichnet.

Eine von einem, bezüglich der Herstellmaschine und/oder bezüglich des diese Maschine betreibenden Unternehmens, externen Rechner ausgehende, die Maschinensteuerung betreffende Änderung, wie bspw. ein Schreibzugriff auf den Controller der Herstellmaschine, die gegebenenfalls nachteilige Effekte auf das durch die Maschine hergestellte Produkt hat, ist, bspw. aufgrund einer Sicherheitslücke, einem Software- oder Hardwarefehler (Spectre und Meltdown) und/oder einer fehlerhaften Konfiguration der Firewalls, durch die bekannte Lösung nicht vollkommen ausschließbar.

Die DE 10 2017 124 821 A1 offenbart eine Vorrichtung zur datensicheren Anbindung eines Prozesssteuerungssystems, mit einem informationsverarbeitenden System, das zum Teil in zwei durch eine Datendiode miteinander verbundene Zonen derart unterteilt ist, dass von der Prozessteuerung des Prozesssteuerungssystems in einem Datenfluss stammende Daten in eine andere Zone ohne die Möglichkeit eines Datenrückflusses übertragbar sind, die eine geringere Datensicherheit aufweist als das bezogen auf den Datenfluss vorangehende Prozesssteuerungssystem und dass die andere Zone in der Art einer Insellösung als ein eigenständiger Rechner ausgebildet ist, der hinsichtlich seiner Hard- und Software eigenständig funktionsfähig ist und auf Hard- und Softwareebene von anderen Rechnern getrennt ausgebildet ist. Das informationsverarbeitende System weist zudem zumindest eine Zone auf, aus der Daten in Richtung der Prozesssteuerung übertragen werden können.

Kapitel 7-9 aus "Industrial Network Security. Securing critical infrastructure networks for smart grid, SCADA, and other indurstial control systems" von E.D. Knapp, ISBN 978-1-59749-645-2 ; ISBN 1-59749-645-6 offenbart den Einsatz von Datendioden in Netzwerkverbindungen.

Die US 2002/0112181 A1 offenbart eine weitere Vorrichtung zur datensicheren Anbindung.

Ausgehend von diesem Stand der Technik liegt der Erfindung die Aufgabe zugrunde, die bekannte Lösung dergestalt weiter zu verbessern, dass die Betriebssicherheit der Herstellmaschine erhöht ist.

Eine dahingehende Aufgabe ist durch eine erfindungsgemäße Vorrichtung zur datensicheren Anbindung mindestens einer Herstellmaschine mit den Merkmalen des Patentanspruchs 1 gelöst.

Gemäß dem Patentanspruch 1 weist die erfindungsgemäße Vorrichtung ein System auf, das in durch Datendioden miteinander verbundene einzelne Zonen derart unterteilt ist, dass von der Maschinensteuerung der Herstellmaschine in einem Datenfluss stammende Daten in andere Zonen ohne die Möglichkeit eines Datenrückflusses übertragbar sind, die hierarchisch geordnet jeweils eine geringere Datensicherheit aufweisen als die bezogen auf den Datenfluss vorangehende Zone und dass jede Zone in der Art einer Insellösung als ein eigenständiger Rechner ausgebildet ist, wobei jeder Rechner hinsichtlich seiner Hard- und Software eigenständig funktionsfähig ist und auf Hard- und Softwareebene von den Rechnern der anderen Zonen getrennt ausgebildet ist.

Auf Hard- und Softwareebene kann jeder Rechner räumlich von den anderen Rechnern getrennt ausgebildet sein.

Durch die dahingehende Ausgestaltung des informationsverarbeitenden Systems unterteilt in Zonen, die jeweils als ein hinsichtlich Soft- und Hardware eigenständig funktionsfähiger Rechner ausgebildet sind, ist durch Trennung der Zonen auf Soft- und auf Hardwareebene eine hinsichtlich der Sicherheit äußerst wirksame Zugriffskontrolle für einen Lese- und/oder Schreibzugriff von, bezüglich der Herstellmaschine, externen Datenverarbeitungseinrichtungen auf die von der Maschinensteuerung der Herstellmaschine stammenden Daten einrichtbar.

Im Konkreten sind verschiedene Zonen des informationsverarbeitenden Systems mit unterschiedlicher Datensicherheit, d. h. Datenkritikalität, definierbar, über die einer jeweiligen, bezüglich der Herstellmaschine, externen Datenverarbeitungseinrichtung entsprechend der Datensicherheit der jeweiligen, mit der Datenverarbeitungseinrichtung verbundenen Zone Zugriffsrechte in Form entweder eines Lese- und Schreibzugriffs oder lediglich eines Lesezugriffs einräumbar sind. So sind die von der Maschinensteuerung der Herstellmaschine stammenden Daten bei einem Zugriff von einer Datenverarbeitungseinrichtung auf die Zone mit der höchsten Datensicherheit sowohl im Sinne eines Schreibzugriffes änderbar als auch lesbar und bei einem Zugriff auf eine Zone mit einer in Relation zu dieser Zone niedrigeren Datensicherheit aufgrund der Datenübertragung ohne Datenrückfluss, also einer unidirektionalen Datenübermittlung, von der Zone mit höchster Datensicherheit in Richtung der Zone mit der in Relation dazu niedrigeren Datensicherheit, lediglich lesbar und nicht im Sinne eines Schreibzugriffs änderbar, also mittels eines Schreibzugriffs unabänderbar.

Dadurch ist eine jeweilige, der Zone mit höchster Datensicherheit untergeordnete Zone mit in Relation zu dieser geringeren Datensicherheit an eine externe Datenverarbeitungseinrichtung anbindbar, ohne dass die Möglichkeit eines Schreibzugriffs auf die von der Maschinensteuerung der Herstellmaschine stammenden Daten der Zone mit der höchsten Datensicherheit besteht. Dadurch ist die Betriebssicherheit der Herstellmaschine erhöht.

In einem bevorzugten Ausführungsbeispiel kann die der Maschinensteuerung nachfolgende erste Zone als Produktionszone zumindest Maschinendaten der Herstellmaschine verarbeiten und an eine Überwachungszone und/oder eine Servicezone als jeweils nachfolgende Zone weiterleiten, die an ein firmeninternes oder externes Netzwerk, wie dem Internet, weiterleitbar sind. Hierbei ist das jeweilige Netzwerk, bezüglich des die Herstellmaschine betreibenden Unternehmens, firmenintern oder (firmen-)extern ausgebildet.

Die Produktionszone der einen Maschinensteuerung kann mittels Datenübertragung an Maschinensteuerungen anderer Herstellmaschinen innerhalb einer Industrieanlage anschließbar sein.

Die Produktionszone ermöglicht zumindest eine der folgenden Datenverarbeitungen: Datenverarbeitung von Daten der Betriebsleitebene (Manufactoring Execution System, MES) eines Fertigungsmanagementsystems, und/oder Datenverarbeitung von über eine Zeitspanne gesammelten Daten und/oder Erzeugung von Produktionsprotokollen und/oder -berichten. Als Betriebsleitebene wird eine prozessnah operierende Ebene eines Fertigungsmanagement- bzw. Produktionsleitsystems bezeichnet, das durch die aus dem Stand der Technik bekannte Automatisierungspyramide schematisch darstellbar ist. Vorliegend stellt das Fertigungsmanagement- bzw. Produktionsleitsystems auf das durch die Herstellmaschine produzierte Produkt ab.

Die Überwachungszone kann zumindest eine der folgenden Datenverarbeitungen ermöglichen: Erzeugung einer Daten-Übersicht einer Herstellmaschine, und/oder Erkennen von Trends, und/oder Aufzeichnung des Maschinen-Betriebszustandes.

Die Servicezone kann zumindest eine der folgenden Datenverarbeitungen ermöglichen: Datenverarbeitung von Wartungs-Daten, und/oder Aufzeichnung des Maschinen-Betriebszustandes, und/oder Durchführen von Ferndiagnosen.

Die Datenübertragung zwischen den einzelnen Produktionsmaschinen einer Industrieanlage kann zumindest die Übertragung folgender Daten ermöglichen: Daten der Betriebsleitebene (Manufactoring Execution System, MES) des Fertigungsmanagementsystems, und/oder über eine Zeitspanne gesammelter Daten.

Das firmeninterne Netzwerk kann zumindest die Übertragung folgender Daten ermöglichen: Daten zur Erzeugung einer Übersicht über mehrere Herstellungsmaschinen, und/oder Daten mobiler Endgeräte.

Das externe Netzwerk kann, vorzugsweise unter Einbezug der Cloud, zumindest die Übertragung von Daten für eine Wartungsplanung, und/oder die Erstellung von Verzeichnissen und/oder Dokumentationsunterlagen ermöglichen. Hier sind insbesondere auch Dienste angesprochen, die durch den Maschinenhersteller angeboten werden. Weitere Anwendungsfälle sind z.B. Maschinenüberwachung oder vorausschauende Wartung (predictive maintenance).

Die jeweils eingesetzte Datendiode zwischen den einzelnen Zonen mit ihren Rechnereinheiten kann aus einer Laser-Diode gebildet sein, die der Lichterzeugung dient, und aus einer Photo-Diode, die der Lichterfassung des erzeugten Lichts dient.

Die Zonen können zumindest teilweise parallel zueinander, jeweils mit der bezogen auf den Datenfluss ersten Zone in Reihe geschaltet sein und/oder zumindest teilweise, ausgehend von der ersten Zone, in Reihe geschaltet sein.

Jede Zone kann eingangsseitig zumindest einen Protokoll-Umsetzer zur Protokollkonvertierung und Kopplung eines mittels der Datendioden übertragbaren Datenübertragungs-Protokolls mit einem durch die Zonen verarbeitbaren Datenübertragungs-Protokoll und/oder ausgangsseitig zumindest einen weiteren Protokoll-Umsetzer zur Protokollkonvertierung und Kopplung eines durch die Zonen verarbeitbaren Datenübertragungs-Protokolls mit einem mittels der Datendioden übertragbaren Datenübertragungs-Protokoll umfassen.

Die Rechner können, insbesondere hinsichtlich ihrer Hard- und/oder Betriebs-Software, gleich ausgebildet sein und für eine bestimmungsgemäße Verwendung, insbesondere mittels Anwendungssoftware, entsprechend einer jeweiligen Zone konfigurierbar sein.

Eine Datendiode kann durch eine Sendeeinheit, die Teil einer jeweiligen Zone ist, und eine Empfangseinheit gebildet sein, die Teil einer in Relation zu dieser Zone eine geringere Datensicherheit aufweisenden Zone ist, wobei die Sendeeinheit und die Empfangseinheit mittels eines Datenübertragungsmittels miteinander verbunden sind.

Die Sendeeinheit kann als Sende-Datendiode ausgebildet sein, die eine Laser-Diode und insbesondere einen Multiplexer und einen Modulator umfasst, wobei die Empfangseinheit als Empfangs-Datendiode ausgebildet sein kann, die eine Photo-Diode und insbesondere einen Demodulator und einen Demultiplexer umfasst, und wobei die Sendeeinheit und die Empfangseinheit über das Datenübertragungsmittel in Form eines Lichtwellenleiter-Kabels miteinander verbunden sind.

Gemäß dem Anspruch 16 ist Gegenstand der Erfindung auch eine Herstellmaschine, die als integralen Bestandteil eine Vorrichtung nach einem der voranstehenden Ansprüche aufweist. Besonders bevorzugt lässt sich die erfindungsgemäße Lösung bei Blasform-, Füll- und Schließmaschinen einsetzen. Solche finden regelmäßig Anwendung in der chemisch-pharmazeutischen sowie Lebensmittelindustrie.

Gemäß dem Anspruch 17 ist Gegenstand der Erfindung ebenso eine Industrieanlage mit mehreren Herstellmaschinen nach Anspruch 16.

In Unternehmen, in denen eine Herstellmaschine aufgrund von zwingend einzuhaltenden behördlichen Auflagen überdurchschnittlich hohen Sicherheitsanforderungen genügen muss, ist die erfindungsgemäße Vorrichtung besonders vorteilhaft einsetzbar.

So hat ein die Herstellmaschine betreibender Produzent bei einer beliebigen die Maschine betreffenden Änderung darzulegen, dass eine jeweilige die Maschine betreffende Änderung keinen nachteiligen Effekt auf das durch die Maschine hergestellte Produkt hat. Eine derartige Änderung kann beispielsweise eine Anbindung der Maschine an eine externe Datenverarbeitungseinrichtung oder eine Installation einer Anwendungssoftware auf dem Controller, d. h. der industriellen Steuerung, der Maschine sein.

Zusätzlich werden aufgrund der behördlichen Regularien die auf dem Controller der Maschine laufenden Softwaredienste, d. h. die verschiedenen Arten von Anwendungssoftware, in Abhängigkeit davon, ob diese zu validierende bzw. validierte oder nicht zu validierende Komponenten und Prozesse der Maschine betreffen, in behördliche Auflagen unterliegende Gute Herstellungspraxis(engl.: Good Manufacturing Practice, GMP)-relevante Softwaredienste oder in kaum behördliche Auflagen unterliegende nicht GMP-relevante Softwaredienste eingeteilt, wobei ein Schreibzugriff von nicht GMP-relevanten Softwarediensten auf validierte Komponenten oder Prozesse der Maschine zwingend auszuschließen ist.

Daher ist in solch "regulierten Unternehmen" nach einer jeden derartigen Änderung eine Validierung der durch diese Änderungen betroffenen Komponenten und Prozesse der Maschine mittels Testverfahren und Risikoabschätzungen durchzuführen, was zeitaufwändig und kostenintensiv ist. Jedoch sind auch durch solche Testverfahren oder Risikoabschätzungen nachteilige Effekte auf das durch die Maschine hergestellte Produkt aufgrund eines Zugriffs von einer, bezüglich der Herstellmaschine, externen Datenverarbeitungseinrichtung auf den Controller der Herstellmaschine oder aufgrund neuer installierter Anwendungssoftware nicht vollständig ausschließbar.

Durch die erfindungsgemäße Ausgestaltung der Vorrichtung gelangen Validierungsprozesse in Form von Risikoabschätzungen und/oder Testverfahren zumindest teilweise zum Wegfall, da die der Zone mit höchster Datensicherheit untergeordnete Zone mit in Relation zu dieser geringeren Datensicherheit an eine externe Datenverarbeitungseinrichtung anbindbar ist, ohne dass die Möglichkeit eines Schreibzugriffs auf die von der Maschinensteuerung der Herstellmaschine stammenden Daten der Zone mit der höchsten Datensicherheit besteht und da GMP-relevante Anwendungssoftware in einer Zone mit höherer Datensicherheit und nicht GMP-relevante Anwendungssoftware in einer Zone mit niedrigerer Datensicherheit ausführbar sind.

Im Ergebnis sind durch die erfindungsgemäße Vorrichtung bei einem Einsatz dieser in Kombination mit einer behördlichen Regularien unterliegenden Herstellmaschine unter Einhaltung der dahingehenden behördlichen Sicherheitsanforderungen die Herstellmaschine betreffende Änderungen einfach und kostengünstig durchführbar, insbesondere hinsichtlich der Anbindung der Herstellmaschine an externe Datenverarbeitungseinrichtungen und/oder der Implementierung von Anwendungssoftware der Herstellmaschine.

Nachfolgend ist die erfindungsgemäße Vorrichtung zur datensicheren Anbindung mindestens einer Herstellmaschine anhand der Zeichnung näher erläutert. Dabei zeigen in prinzipieller und nicht maßstäblicher Darstellung die
- Fig.1: in einer schematischen Blockdarstellung eine aus dem Stand der Technik bekannte Vorrichtung zur datensicheren Anbindung mindestens einer Herstellmaschine;
- Fig. 2: in einer schematischen Blockdarstellung eine erfindungsgemäße Vorrichtung zur datensicheren Anbindung mindestens einer Herstellmaschine; und
- Fig. 3: in einer schematischen Blockdarstellung den Datenfluss der erfindungsgemäßen Vorrichtung aus Fig. 2 von einer auf einer Zone implementierten Anwendungssoftware zu einer auf einer anderen Zone implementierten Anwendungssoftware.

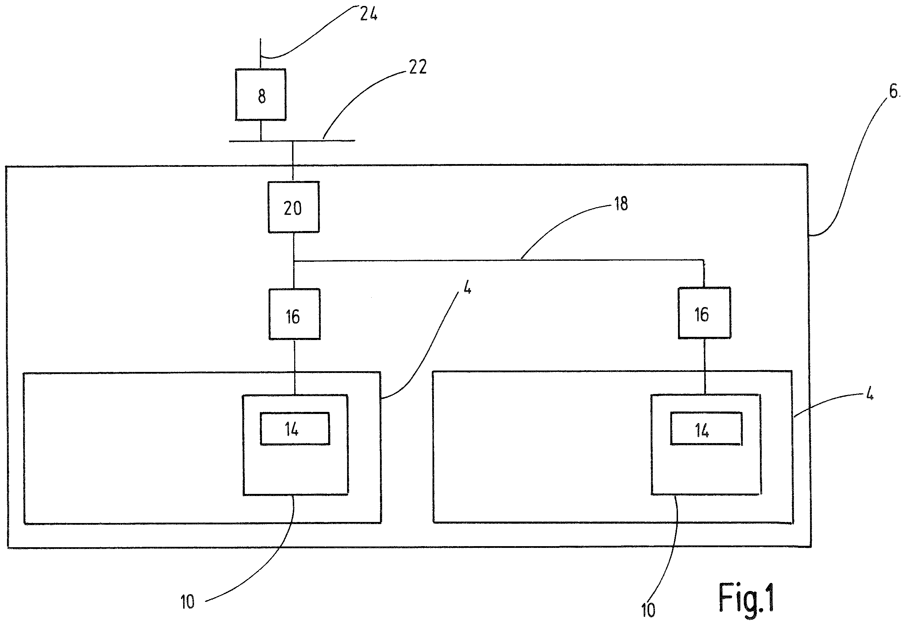

In der Fig. 1 ist in einer schematischen Blockdarstellung die aus dem Stand der Technik (US 2015/0106912 A1) bekannte Vorrichtung zur Anbindung mindestens einer Herstellmaschine 4 an eine, bezüglich der Herstellmaschine 4 und bezüglich des die Herstellmaschine 4 betreibenden Unternehmens 6, externe Datenverarbeitungseinrichtung in Form eines Datenservers 8 gezeigt. Die Vorrichtung umfasst einen Controller 10, nämlich die Steuerung der Maschine, der als integraler Bestandteil der Herstellmaschine 4 ausgebildet ist und auf dem Software 14 zur Datenverarbeitung der Maschinendaten der Herstellmaschine 4, insbesondere zur Pufferung, Weiterleitung und/oder Komprimierung, implementiert ist und der über eine bezüglich der Herstellmaschine 4 externe und bezüglich des die Herstellmaschine betreibenden Unternehmens firmeninterne Firewall 16 mit einem firmeninternen Maschinen-Netzwerk 18 verbunden ist, in dem mehrere Herstellmaschinen 4 vorgesehen sind und das über eine weitere firmeninterne Firewall 20 über ein firmenexternes Netzwerk 22 mit dem firmenexternen Datenserver 8 verbunden ist, der mittels Internet 24 mit einem in den Figuren nicht dargestellten Remote-Service verbindbar ist, wobei im Rahmen eines Remote-Services ein entfernt von dem die Herstellmaschine betreibenden Unternehmen arbeitender Experte mittels eines Rechners eine Fehlerbehebung der Herstellmaschine über das Internet 24 durchführt.

Eine Zugriffskontrolle auf den Controller 10 der Herstellmaschine 4 für die Durchführung des Remote-Services ist durch eine Verschlüsselung oder durch ein Hochladen der Maschinendaten von dem Controller 10, ohne einen Datenrückfluss, ausschließlich in Richtung zu dem firmenexternen Rechner des Experten implementiert.

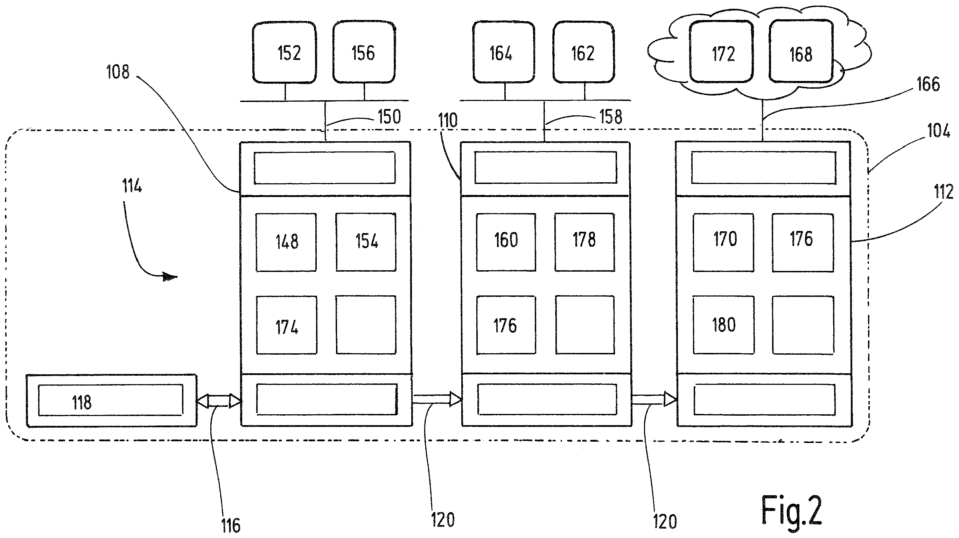

Fig. 2 zeigt in einer prinzipiellen Blockdarstellung schematisch eine erfindungsgemäße, als Mehr-Zonen Computing Plattform bezeichenbare Vorrichtung zur Anbindung mindestens einer Herstellmaschine 104 an, bezüglich der Herstellmaschine 104, externe, in den Figuren nicht dargestellte Datenverarbeitungseinrichtungen. Die Herstellmaschine 104 kann bereits in Kombination mit der Vorrichtung als integraler Bestandteil der Herstellmaschine 104 gefertigt und ausgeliefert werden oder erst nachträglich nach Auslieferung der Herstellmaschine 104 mit der Vorrichtung ausgestattet werden.

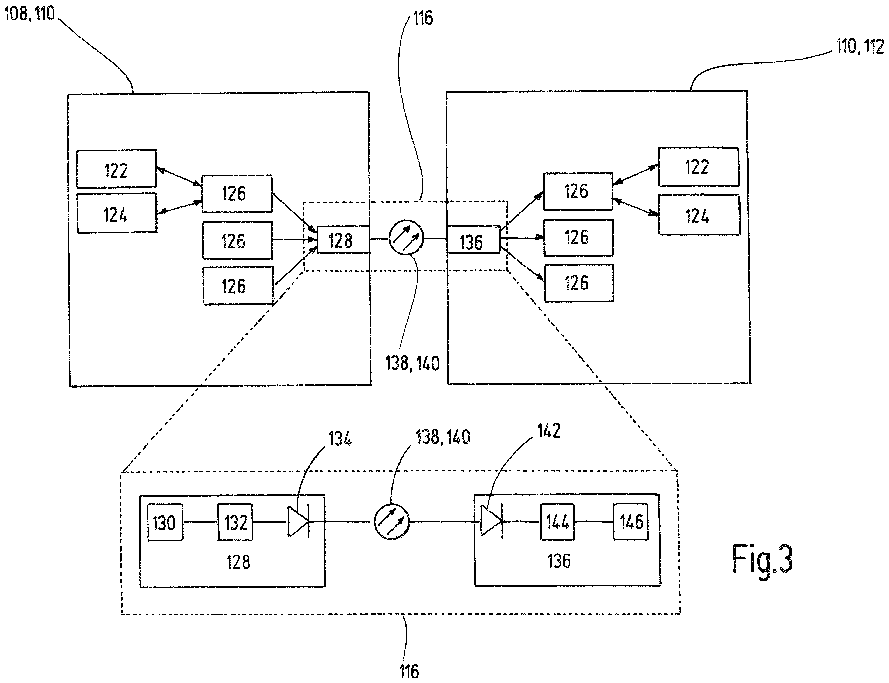

Die erfindungsgemäße Vorrichtung weist ein in drei einzelne Zonen 108, 110, 112 (Fig. 2) in Form von Rechnern unterteiltes informationsverarbeitendes System 114 auf, wobei jeder Rechner hinsichtlich seiner Hard- und Software eigenständig funktionsfähig ist und auf Hard- und Softwareebene, und insbesondere räumlich, von den Rechnern der anderen Zonen 108, 110, 112 getrennt ausgebildet ist. Zudem entsprechen sich die Rechner hinsichtlich ihrer Hardware und ihrer Betriebssoftware und sind jeweils für eine entsprechend der jeweiligen Zone 108, 110, 112 bestimmungsgemä-ßen Verwendung mittels Anwendungssoftware 122, 124 (Fig. 3) (Application Software, App) konfigurierbar. Die Anwendungssoftware 122, 124 kann bspw. zur Datenumwandlung, -verarbeitung oder -weiterleitung dienen.

Eine erste Zone 108 (Fig. 2) ist über eine, insbesondere bidirektionale, Datenverbindung 116 mit der Maschinensteuerung 118 der Herstellmaschine 104 verbunden und dient zur Verarbeitung der von der Maschinensteuerung 118 über die Datenverbindung 116 übermittelten Daten. Zusätzlich kann die erste Zone 108 über ein Netzwerk mit der Maschinensteuerung mindestens einer weiteren Herstellmaschine, insbesondere bidirektional, verbunden sein, wobei sämtliche mit der ersten Zone 108 über das Netzwerk verbundenen Herstellmaschinen innerhalb einer Industrieanlage vorgesehen sind. Zudem ist im Sinne einer Reihenschaltung die erste Zone 108 mit einer zweiten Zone 110 und die zweite Zone 110 mit einer dritten Zone 112 durch jeweils ein unidirektionales Datenübertragungsmittel in Form einer Datendiode 120 verbunden, wodurch die Richtung des Datenflusses der in der ersten Zone 108 befindlichen Daten der Maschinensteuerung 118 von der ersten Zone 108 zu der zweiten Zone 110 und von der zweiten Zone 110 zu der dritten Zone 112 vorgegeben ist, wobei ein Rückfluss von Daten von der dritten Zone 112 in die zweite Zone 110 und/oder von der zweiten Zone 110 in die erste Zone 108 vollständig ausgeschlossen ist. In Richtung des Datenflusses weisen die Zonen 108, 110, 112 ausgehend von der ersten Zone 108 mit der höchsten Datensicherheit, d. h. Datenkritikalität, hierarchisch abfallend angeordnet, jeweils eine geringere Datensicherheit als die bezogen auf den Datenfluss vorangehende mindestens eine Zone 108, 110 auf, so dass die letzte Zone der hierarchisch abfallend ausgebildeten Reihenschaltung, nämlich in Fig. 2 die dritte Zone 112, die niedrigste Datensicherheit aufweist.

Jede Zone 108, 110, insbesondere eine Sendeeinheit 128 (Fig. 3) der jeweiligen Zone 108, 110, umfasst ausgangsseitig zumindest ein konfigurierbares Filtermodul, das von einer Datenmenge einer jeweiligen Zone 108, 110 zumindest eine vorgebbare, ungefilterte Teilmenge zur Übertragung mittels der jeweiligen Datendiode 120 an eine eine geringe Datensicherheit aufweisende Zone 110, 112 bereitstellt. Mittels des Filtermoduls ist selektierbar welche Daten eine jeweilige Zone 108, 110 verlassen dürfen und der nachfolgenden Zone mit der niedrigeren Datensicherheit bereitgestellt werden.

Fig. 3 zeigt in einer prinzipiellen Blockdarstellung schematisch den Datenfluss von einer jeweiligen Zone 108, 110 zu einer anderen Zone 110, 112 der erfindungsgemäßen Vorrichtung, auf denen jeweils verschiedene Arten von Anwendungssoftware 122, 124 implementiert sind. Die durch eine jeweilige, auf der Zone 108, 110 mit der höheren Datensicherheit implementierte Anwendungssoftware 122, 124 verarbeiteten Daten werden zunächst an einen von mehreren in dieser Zone 108, 110 vorgesehenen Protokollumsetzern 126 übermittelt, der zur Protokollkonvertierung und Kopplung eines durch die Zone 108, 110 mit der höheren Datensicherheit verarbeitbaren Datenübertragungs-Protokolls mit einem mittels der Datendiode 120 übertragbaren Datenübertragungs-Protokoll dient. Die protokollkonvertierten Daten werden von dem Protokollumsetzer an eine in der Zone 108, 110 mit der höheren Datensicherheit vorgesehene Sendeeinheit 128 der Datendiode 120 übergeben, die einen Multiplexer 130 aufweist, der ausgangsseitig an einen Modulator 132 der Sendeeinheit 128 angeschlossen ist, der die modulierten Daten an eine von der Sendeeinheit 128 umfasste Laser-Diode 134 zur Erzeugung eines Lichtsignals übergibt.

Der Multiplexer 130 wird durch die Schicht 2a in Form der MAC(Media Acess Control)-Schicht gemäß dem aus dem Stand der Technik bekannten OSI-Modell (Open System Interconnection Model) bereitgestellt, die zusätzlich eine Datenflusskontrolle umfassen kann und die Teil der Schicht 2 in Form der Sicherungsschicht (Data Link Layer) gemäß OSI-Modell ist. Durch den Multiplexer 130 sind die von den Protokollumsetzern 126 bereitgestellten Daten in Form entsprechender verschiedener Datenströme über einen einzigen Kanal in Form der Datendiode 120 übertragbar. Der Modulator 132 wird durch die Schicht 1 in Form der Bitübertragungsschicht (Physical Layer) gemäß OSI-Modell bereitgestellt und dient zur Kodierung der in der Zone 108, 110 mit der höheren Datensicherheit digital vorliegenden Daten in durch die Datendiode 120 übertragbare, modulierte, analoge Daten. Die Laser-Diode ist Teil eines Ethernet Transceivers, z.B. SFP (Small Form-Factor Pluggable) oder SFP+, der als Lichtwellenleiter-Netzwerk-Schnittstelle dient und dessen Datenempfangs-Port (Rx-Port) blockiert ist.

Die Zone 110, 112 mit der niedrigeren Datensicherheit (Fig. 3) weist eine Empfangseinheit 136 der Datendiode 120 auf, die mit der Sendeeinheit 128 der Zone 108, 110 mit der höheren Datensicherheit über ein Datenübertragungsmittel 138 in Form eines Lichtwellenleiter-Kabels 140 verbunden ist, das das von der Laser-Diode 134 der Sendeeinheit 128 abgegebene, Daten aufweisende Lichtsignal zu der Empfangseinheit 136 der Datendiode 120 übermittelt, die eine Photo-Diode 142 zum Erfassen des Lichtsignals umfasst. Zudem weist die Empfangseinheit 136 einen Demodulator 144 auf, dem eingangsseitig der von der Photo-Diode 142 empfangene Datenstrom zugeführt wird und der ausgangsseitig die demodulierten Daten an einen Demultiplexer 146 der Empfangseinheit 136 weitergibt, die ausgangsseitig die durch diese verarbeitenen Daten an zumindest einen Protokoll-Umsetzer 126 übermittelt, jeweils zur Protokollkonvertierung und Kopplung des mittels der Datendiode 120 übertragbaren Datenübertragungs-Protokolls mit dem durch die Zone 110, 112 mit der niedrigeren Datensicherheit verarbeitbaren Datenübertragungs-Protokoll. Jeder Protokoll-Umsetzer 126 stellt die konvertierten Daten verschiedenen Arten von Anwendungssoftware 122, 124 zur weiteren Verarbeitung zur Verfügung.

Die Photo-Diode 142 ist Teil eines Ethernet Transceivers (z.B. SFP oder SFP +), der als Lichtwellenleiter-Netzwerk-Schnittstelle dient und dessen Datensende-Port (Tx-Port) blockiert ist. Der Demodulator 144 wird durch die Bitübertragungsschicht gemäß OSI-Modell bereitgestellt und dient zur Dekodierung der durch die Datendiode 120 übertragbaren, modulierten, analogen Daten in von der Zone 110, 112 mit der niedrigeren Datensicherheit verarbeitbare digitalen Daten. Der Demultiplexer 146 wird durch die MAC-Schicht gemäß OSI-Modell bereitgestellt und dient zur Trennung der durch den Multiplexer 130 der Sendeinheit 128 vereinten Datenströme.

In Fig. 2 ist die erste Zone 108 als Produktionszone, die zweite Zone 110 als Überwachungszone und die dritte Zone 112 als Servicezone ausgebildet.

Die Produktionszone 108 (Fig. 2) ist mittels ihrer MES-Schnittstelle 148 über ein hinsichtlich des die Herstellmaschine 104 betreibenden Unternehmens, firmeninternes Fertigungs-Netzwerk 150, bspw. über ein Local Area Network (LAN), mit einem Rechner der Betriebsleitebene 152 (Manufactoring Execution System, MES) des Fertigungsmanagementsystems zum Leiten der Fertigung des mittels der Herstellmaschine 104 produzierten Produkts und/oder mittels ihrer Datenbank-Schnittstelle 154 über das Fertigungs-Netzwerk 150 mit einem Rechner einer Datenspeichereinrichtung 156 verbindbar, auf der über einen, insbesondere langen, Zeitraum gesammelte Maschinendaten gespeichert bzw. gepuffert werden und von der diese abrufbar sind. Durch die Betriebsleitebene 152 sind gleichzeitig mehrere Herstellmaschinen 104 einer Industrieanlage automatisch steuerbar, wodurch der Produktionsprozess rationalisierbar ist und menschliche Fehler, bspw. Tippfehler, minimierbar sind. Auf der Datenspeichereinrichtung 156 sind Sollwerte, Prozesswerte, Alarme und/oder Ereignisse langfristig ablegbar oder sind kurzfristig, insbesondere unter Verwendung von OPC Historical Data Access (HDA), Daten pufferbar. Die Produktionszone 108 dient neben der Verarbeitung von Daten der Maschinensteuerung zum Weiterleiten dieser Daten an den Rechner der Betriebsleitebene 152 und/oder an den Rechner der Datenspeichereinrichtung 156 sowie zur Verarbeitung von von dem Rechner der Betriebsleitebene 152 und/oder dem Rechner der Datenverarbeitungseinrichtung 156 übermittelten Daten. Die Datenverarbeitung umfasst die Erzeugung von Produktionsprotokollen 174 und -berichten 174.

Die Überwachungszone 110 (Fig. 2) ist über ein, hinsichtlich des die Herstellmaschine 104 betreibenden Unternehmens, firmeninternes Büro-Netzwerk 158, bspw. über ein weiteres Local Area Network (LAN), mit einem Rechner verbindbar, auf dem eine Datenübersicht 164 von Daten sämtlicher Herstellmaschinen 104 der Industrieanlage erzeugbar ist, und/oder mit mobilen Endgeräten 162 verbunden, bspw. einem Tablet, einem Laptop und/oder einem Smartphone. Die Überwachungszone 110 (Fig. 2) dient zum Erzeugen einer Datenübersicht 160 über die Daten einer Herstellmaschine 104, zur Erkennung von Trends 178 und zum Aufzeichnen des Betriebszustandes 176 der Herstellmaschine 104, berechnet jeweils aus den an die Überwachungszone 110 übermittelten Daten der Maschinensteuerung 118 der Herstellmaschine 104. Mittels der Datenübersicht 160 kann die Effizienz der Herstellmaschine 104 überwacht werden und weniger effiziente Komponenten ermittelt werden. Zudem kann mittels der Datenübersicht 160 bei Anzeige der wichtigsten Leistungsindikatoren ein besonders guter Überblick über die Herstellmaschine 104 gewonnen werden. Die Datenübersicht 160 ist über den Browser der Endgeräte 162 abrufbar.

Die Servicezone 112 (Fig. 2) ist über ein externes Netzwerk 166, bspw. über ein Wide Area Network (WAN), vorzugsweise über das Internet, besonders bevorzugt unter Verwendung von Cloud Computing, mit einem Rechner zur Erstellung eines Verzeichnisses 168 und/oder einer Dokumentation 168, und/oder über das externe Netzwerk 166 mittels einer Wartungsschnittstelle 170 mit einem Rechner des Herstellers 172 der Herstellmaschine verbindbar. Die Verzeichnisse 168 und/oder die Dokumentation 168 können sich in der Cloud (Cloud Computing) befinden und Listen von Ersatzteilen der Herstellmaschine 104 umfassen. Die Dokumentation 168 beinhaltet technische Informationen zu der Herstellmaschine 104 und den zugehörigen Komponenten, insbesondere zu der erfindungsgemäßen Vorrichtung. Die Servicezone 112 dient zur Aufzeichnung des Betriebszustandes 176 der Herstellmaschine und/oder zur Durchführung von Ferndiagnosen 180. Im Rahmen von Ferndiagnosen 180 kann der Maschinenhersteller dem Produzenten eine Hilfestellung zur Fehlerbehebung zukommen lassen.

Im Folgenden werden Beispielanwendungen der erfindungsgemäßen Vorrichtung und deren Vorteile näher erörtert:
Ferndiagnose: Durch die Einführung einer Servicezone 112 kann durch den Maschinenhersteller 172 eine Ferndiagnose 180 angeboten werden, die kein zusätzliches Risiko und keinen zusätzlichen Validierungsaufwand für den Produzenten bedeutet. Der Zugriff des Herstellers 172 ist hierbei mittels des Daten-Filters auf eine Untermenge der Daten aus der Servicezone 112 beschränkt.

Maschinenoptimierung: Durch die Einführung einer Servicezone 112 in der Herstellmaschine 104 können Nutzungsdaten der Maschine 104 erfasst und an den Maschinenhersteller 172 übermittelt werden. Diese Daten können dem Maschinenhersteller 172 als Grundlage für Weiterentwicklungen und Verbesserungen dienen. Damit können zukünftige Maschinengenerationen besser an das tatsächliche Nutzungsverhalten von Kunden angepasst werden.

Effizienzdatenerfassung: Die Ausbildung verschiedener Zonen 108, 110, 112 erlaubt die Bereitstellung der Effizienzdaten im Büro-Netzwerk 158 oder einem Cloud-Dienst. Die Effizienzdatenerfassung von Produktionslinien und Maschinen 104, bspw. Overall Equipment Effectiveness (OEE), erlaubt dem Produzenten Prozessänderungen zu bewerten und Verbesserungspotentiale zu identifizieren. Insbesondere ist das Erfassen von Kennzahlen nicht unbedingt GMP-relevant. So benötigt die Kennzahlenerfassung keinen schreibenden Zugriff auf die Produktionszone 108, sondern nur die jeweiligen Informationen. Insofern ist es möglich die Kennzahlenerfassung und Auswertung in einer eigenen Zone 110, 112 zu betreiben.

Wartungsplanung: Die Ausbildung verschiedener Zonen 108, 110, 112 erlaubt die Bereitstellung von Laufzeitinformationen, wodurch die Wartungsplanung verbessert wird. So benötigt die Planung von Wartungstätigkeiten an einer Herstellmaschine 104 im Idealfall Daten über die Laufzeit oder Schaltzyklen einzelner Bauteile oder Baugruppen, bspw. muss ein Ventil nach einer bestimmten Anzahl von Schaltzyklen oder eine Dichtung nach einer bestimmten Anzahl von Betriebsstunden ausgetauscht werden. Zum einen kann der Maschinenhersteller 172 Laufzeitinformationen verwenden um Ersatzteillieferungen schon vor der Produzentenbestellung vorzubereiten oder auch den Produzenten über anfallende Wartungsarbeiten informieren, zum anderen kann der Produzent derartige Informationen nutzen um einen effizienteren Wartungsplan aufzustellen.

Vorausschauende Instandhaltung (Predictive Maintenence): Die Ausbildung verschiedener Zonen 108, 110, 112 erlaubt eine datengestützte Analyse von Maschinendaten, bspw. der Schaltzeit von Ventilen, um abschätzen zu können, wann ein Bauteil auszutauschen ist. Die Vorrichtung erlaubt hierfür eine lokale Verarbeitung in einer Nicht-Produktionszone, also der Überwachungs- 110 oder Servicezone 112. Zusätzlich kann die entsprechende Anwendungssoftware 122, 124 (Fig. 3) an externe Dienste gekoppelt werden.

Vorabvalidierung von Anwendungssoftware: Die Ausbildung verschiedener Zonen 108, 110, 112 erlaubt es neuinstallierte Anwendungssoftware 122, 124 (Fig. 3) in einer Nicht-Produktionszone, bspw. in der Überwachungs-110 oder Servicezone 112, parallel zur eingesetzten Anwendungssoftware 122, 124 auszuführen, wobei die Software 122, 124 in beiden genannten Zonen 108, 110, 112 mit identischen Produktionsdaten versorgt wird, wodurch testbar ist, ob die neuinstallierte Anwendungssoftware 122, 124 dieselben Ergebnisse wie die bereits implementierte Anwendungssoftware 122, 124 liefert. Auf diesem Weg ist im laufenden Betrieb testbar, ob die neuinstallierte Anwendungssoftware 122, 124 die Integrität, die Sicherheit und/oder die Produktivität der Industrieanlage gefährdet.

Produktionsprotokolle: Das Ausbilden von verschiedenen Zonen 108, 110, 112 erlaubt das Erzeugen von Protokollen 174 (Fig. 2) und -berichten 174 in der Überwachungs- 110 oder Servicezone 112, da das Aufbereiten von Produktionsinformationen, bspw. Erzeugen von Produktionsprotokollen 174, keinen Zugriff auf die Produktionszone 108 benötigt, lediglich auf Maschinendaten.

GMP-Dokumentation: Durch die Trennung der GMP-relevanten und der nicht GMP-relevanten Software 122, 124 in unterschiedliche Zonen 108, 110, 112 kann der Umfang der notwendigen GMP-Dokumentation auf die GMP-relevante Software 122, 124 in der Produktionszone 108 reduziert werden.

Sichere Anbindung von Alarmen über unsichere Netzwerke 166: Die Vorrichtung ermöglicht es Alarme, Statusmeldung und andere Informationen ohne Sicherheitsrisiko für den Produzenten über, insbesondere unsichere, Netzwerke 166, wie bspw. das Internet und/oder mobile Netzwerke, direkt auf Endgeräte 162, wie bspw. Tablets, Laptops und/oder Smartphones, zu schicken.

## Patentansprüche

1. Vorrichtung zur datensicheren Anbindung mindestens einer Herstellmaschine (104), mit einem informationsverarbeitenden System (114), das in durch Datendioden (120) miteinander verbundene einzelne Zonen (108, 110, 112) derart unterteilt ist, dass von der Maschinensteuerung (118) der Herstellmaschine (104) in einem Datenfluss stammende Daten in andere Zonen (110, 112) ohne die Möglichkeit eines Datenrückflusses übertragbar sind, die hierarchisch geordnet jeweils eine geringere Datensicherheit aufweisen als die bezogen auf den Datenfluss vorangehende Zone (108, 110), **dadurch gekennzeichnet, dass** jede Zone (108, 110, 112) in der Art einer Insellösung als ein eigenständiger Rechner ausgebildet ist, wobei jeder Rechner hinsichtlich seiner Hard- und Software eigenständig funktionsfähig ist und auf Hard- und Softwareebene von den Rechnern der weiteren Zonen (108, 110, 112) getrennt ausgebildet ist.

2. Vorrichtung nach Anspruch 1, **dadurch gekennzeichnet, dass** die der Maschinensteuerung (118) nachfolgende erste Zone (108) als Produktionszone zumindest Maschinendaten der Herstellmaschine (104) verarbeitet und an eine Überwachungszone (110) und/oder eine Servicezone (112) als jeweils nachfolgende Zone weiterleitet, die an ein firmeninternes (150, 158) bzw. externes Netzwerk (166), wie dem Internet, weiterleitbar sind.

3. Vorrichtung nach Anspruch 2, **dadurch gekennzeichnet, dass** die Produktionszone (108) der einen Maschinensteuerung (118) mittels Datenübertragung (116) an Maschinensteuerungen anderer Herstellmaschinen innerhalb einer Industrieanlage anschließbar ist.

4. Vorrichtung nach Anspruch 2 oder 3, **dadurch gekennzeichnet, dass** die Produktionszone (108) zumindest eine der folgenden Datenverarbeitungen ermöglicht:
- Datenverarbeitung von Daten der Betriebsleitebene (152) (Manufactoring Execution System, MES) eines Fertigungsmanagementsystems,
- Datenverarbeitung von über eine Zeitspanne gesammelten Daten (156),
- Erzeugung von Produktionsprotokollen (174) und/oder -berichten (174).

5. Vorrichtung nach einem der Ansprüche 2 bis 4, **dadurch gekennzeichnet, dass** die Überwachungszone (110) zumindest eine der folgenden Datenverarbeitungen ermöglicht:
- Erzeugung einer Datenübersicht (160) einer Herstellmaschine (104),
- Erkennen von Trends (178),
- Aufzeichnung des Maschinen-Betriebszustandes (176).

6. Vorrichtung nach einem der Ansprüche 2 bis 5, **dadurch gekennzeichnet, dass** die Servicezone (112) zumindest eine der folgenden Datenverarbeitungen ermöglicht:
- Datenverarbeitung von Wartungs-Daten,
- Aufzeichnung des Maschinen-Betriebszustandes (176),
- Durchführen von Ferndiagnosen (180).

7. Vorrichtung nach einem der Ansprüche 3 bis 6, **dadurch gekennzeichnet, dass** die Datenübertragung zwischen den einzelnen Herstellmaschinen einer Industrieanlage zumindest die Übertragung folgender Daten ermöglicht:
- Daten der Betriebsleitebene (152) (Manufactoring Execution System, MES) eines Fertigungsmanagementsystems,
- über eine Zeitspanne gesammelter Daten (156).

8. Vorrichtung nach einem der Ansprüche 2 bis 7, **dadurch gekennzeichnet, dass** das firmeninterne Netzwerk (158) zumindest die Übertragung folgender Daten ermöglicht:
- Daten zur Erzeugung einer Datenübersicht (164) über mehrere Herstellungsmaschinen (104),
- Daten mobiler Endgeräte (162).

9. Vorrichtung nach einem der Ansprüche 2 bis 8, **dadurch gekennzeichnet, dass** das externe Netzwerk (166), vorzugsweise unter Einbezug der Cloud, zumindest die Übertragung von Daten für
- eine Wartungsplanung und/oder
- eine Erstellung von Verzeichnissen (168) und/oder Dokumentationsunterlagen (168) und/oder
- eine Verknüpfung von echten Maschinendaten mit Dokumentation in der Cloud ermöglicht.

10. Vorrichtung nach einem der vorstehenden Ansprüche, **dadurch gekennzeichnet, dass** die jeweils eingesetzte Datendiode (120) zwischen den einzelnen Zonen (108, 110, 112) mit ihren Rechnereinheiten aus einer Laser-Diode (134) gebildet ist, die der Lichterzeugung dient, und aus einer Photo-Diode (142), die der Lichterfassung des erzeugten Lichts dient.

11. Vorrichtung nach einem der vorstehenden Ansprüche, **dadurch gekennzeichnet, dass** die Zonen (110, 112) zumindest teilweise parallel zueinander, jeweils mit der bezogen auf den Datenfluss ersten Zone (108) in Reihe geschaltet sind und/oder zumindest teilweise, ausgehend von der ersten Zone (108), in Reihe geschaltet sind.

12. Vorrichtung nach einem der vorstehenden Ansprüche, **dadurch gekennzeichnet, dass** jede Zone (108, 110, 112) eingangsseitig zumindest einen Protokoll-Umsetzer (126) zur Protokollkonvertierung und Kopplung eines mittels der Datendioden (120) übertragbaren Datenübertragungs-Protokolls mit einem durch die Zonen (108, 110, 112) verarbeitbaren Datenübertragungs-Protokoll und/oder ausgangsseitig zumindest einen weiteren Protokoll-Umsetzer (126) zur Protokollkonvertierung und Kopplung eines durch die Zonen (108, 110, 112) verarbeitbaren Datenübertragungs-Protokolls mit einem mittels der Datendioden (120) übertragbaren Datenübertragungs-Protokoll umfasst.

13. Vorrichtung nach einem der vorstehenden Ansprüche, **dadurch gekennzeichnet, dass** die Rechner, insbesondere hinsichtlich ihrer Hard- und/oder Betriebs-Software, gleich ausgebildet sind und für eine bestimmungsgemäße Verwendung, insbesondere mittels Anwendungs-Software (122, 124), entsprechend einer jeweiligen Zone (108, 110, 112) konfigurierbar sind.

14. Vorrichtung nach einem der vorstehenden Ansprüche, **dadurch gekennzeichnet, dass** eine Datendiode (120) durch eine Sendeeinheit (128), die Teil einer jeweiligen Zone (108, 110, 112) ist, und eine Empfangseinheit (136) gebildet ist, die Teil einer eine geringere Datensicherheit aufweisenden Zone (110, 112) ist, wobei die Sendeeinheit (128) und die Empfangseinheit (136) mittels eines Datenübertragungsmittels (138) miteinander verbunden sind.

15. Vorrichtung nach Anspruch 14, **dadurch gekennzeichnet, dass** die Sendeeinheit (128) als Sende-Datendiode ausgebildet ist, die eine Laser-Diode (134) und insbesondere einen Multiplexer (130) und einen Modulator (132) umfasst, dass die Empfangseinheit (136) als Empfangs-Datendiode ausgebildet ist, die eine Photo-Diode (142) und insbesondere einen Demodulator (144) und einen Demultiplexer (146) umfasst, und dass die Sendeeinheit (128) und die Empfangseinheit (136) über das Datenübertragungsmittel (138) in Form eines Lichtwellenleiter-Kabels (140) miteinander verbunden sind.

16. Herstellmaschine, die als integralen Bestandteil eine Vorrichtung nach einem der voranstehenden Ansprüche aufweist.

17. Industrieanlage mit mehreren Herstellmaschinen nach Anspruch 16.

## Claims

1. Device for secure data connection of at least one manufacturing machine (104), having an information processing system (114), which is subdivided into individual zones (108, 110, 112) interconnected by data diodes (120) such that data originating from the machine control system (118) of the manufacturing machine (104) in a data flow can be transferred to other zones (110, 112) without the possibility of any data backflow, wherein said zones (110, 112), ordered hierarchically, each have a lower level of data security than the upstream zone (108, 110) in relation to the data flow, **characterised in that** each zone (108, 110, 112) is designed as an independent computer in the manner of an isolated application, each computer being functionally independent with regard to its hardware and software and being designed such that it is separate, on a hardware and software level, from the computers in the other zones (108, 110, 112).

2. Device according to claim 1, **characterised in that** the first zone (108) downstream of the machine control system (118), as a production zone, at least processes machine data from the manufacturing machine (104) and forwards said data to a monitoring zone (110) and/or a service zone (112) as the respective downstream zone, wherein said machine data can be forwarded to an in-house network (150, 158) or external network (166), such as the internet.

3. Device according to claim 2, **characterised in that** the production zone (108) of one machine control system (118) is connected by data transfer (116) to machine control systems of other manufacturing machines within a production plant.

4. Device according to either claim 2 or claim 3, **characterised in that** the production zone (108) permits at least one of the data processing operations listed below:
- data processing of data from the manufacturing execution system (MES) (152) of a manufacturing management system,
- data processing of data (156) collected over a period of time,
- generation of production logs (174) and/or reports (174).

5. Device according to any of claims 2 to 4, **characterised in that** the monitoring zone (110) permits at least one of the data processing operations listed below:
- generation of a data overview (160) for a manufacturing machine (104),
- detection of trends (178),
- recording the machine operating status (176).

6. Device according to any of claims 2 to 5, **characterised in that** the service zone (112) permits at least one of the data processing operations listed below:
- data processing of maintenance data,
- recording the machine operating status (176),
- performing remote diagnostics (180).

7. Device according to any of claims 3 to 6, **characterised in that** data transfer between the individual manufacturing machines of a production plant at least permits the data listed below to be transferred:
- data from the manufacturing execution system (MES) (152) of a manufacturing management system,
- data (156) collected over a period of time.

8. Device according to any of claims 2 to 7, **characterised in that** the in-house network (158) at least permits the data listed below to be transferred:
- data for generating a data overview (164) for a plurality of manufacturing machines (104),
- data from mobile terminal devices (162).

9. Device according to any of claims 2 to 8, **characterised in that** the external network (166), preferably involving the cloud, at least permits data to be transferred for
- maintenance planning and/or
- creating directories (168) and/or documentation records (168) and/or
- linking real machine data and documentation in the cloud.

10. Device according to any of the preceding claims, **characterised in that** the respective data diode (120) used between the individual zones (108, 110, 112) with their computer units is formed by a laser diode (134), which is used for light generation, and a photo diode (142), which is used for light detection of the generated light.

11. Device according to any of the preceding claims, **characterised in that** the zones (110, 112), which are at least partially interconnected in parallel, are each connected in series with the first zone (108) with respect to the data flow, and/or are at least partially connected in series, starting from the first zone (108).

12. Device according to any of the preceding claims, **characterised in that** each zone (108, 110, 112) comprises, on its input side, at least one protocol converter (126) for converting protocols and coupling a data transfer protocol that can be transmitted by means of the data diodes (120) to a data transfer protocol that can be processed by the zones (108, 110, 112) and/or, on its output side, at least one further protocol converter (126) for converting protocols and coupling a data transfer protocol that can be processed by the zones (108, 110, 112) to a data transfer protocol that can be transmitted by means of the data diodes (120).

13. Device according to any of the preceding claims, **characterised in that** the computers are designed identically, in particular with regard to their hardware and/or operating software, and can be configured for their intended use, in particular by means of application software (122, 124), in accordance with the individual zone (108, 110, 112).

14. Device according to any of the preceding claims, **characterised in that** a data diode (120) is formed by a transmitter unit (128), which is part of a respective zone (108, 110, 112), and a receiver unit (136), which is part of a zone (110, 112) having a lower level of data security, wherein a data transmission means (138) is used to interconnect the transmitter unit (128) and the receiver unit (136).

15. Device according to claim 14, **characterised in that** the transmitter unit (128) is designed as a transmitting data diode comprising a laser diode (134), and in particular a multiplexer (130) and a modulator (132), **in that** the receiver unit (136) is designed as a receiving data diode comprising a photo diode (142) and in particular a demodulator (144) and a demultiplexer (146), and **in that** the transmitter unit (128) and the receiver unit (136) are interconnected via the data transmission means (138) in the form of an optical fibre cable (140).

16. Manufacturing machine having a device according to any of the preceding claims as an integral part thereof.

17. Production plant comprising a plurality of manufacturing machines according to claim 16.

## Revendications

1. Dispositif de connexion avec sécurisation de données d'au moins une machine (104) de fabrication, comprenant un système (114) de traitement de l'information, qui est subdivisé en diverses zones (108, 110, 112) reliées entre elles par des diodes (120) de données, de manière à pouvoir, par la commande (118) de la machine (104) de fabrication, transmettre des données provenant d'un flux de données à d'autres zones (110, 112) sans qu'un reflux de données ne soit possible, qui ont, en étant ordonnées hiérarchiquement, une sécurisation de données plus petite que la zone (108, 110) précédente en ce qui concerne le flux de données, **caractérisé en ce que** chaque zone (108, 110, 112) est constituée à la manière d'une solution isolée sous la forme d'un ordinateur autonome, dans lequel chaque ordinateur est apte à fonctionner de manière autonome en ce qui concerne son matériel et son logiciel et est constitué sur le plan matériel et logiciel en étant séparé des ordinateurs des autres zones (108, 110, 112).

2. Procédé suivant la revendication 1, **caractérisé en ce que** la première zone (108) suivant la commande (118) de la machine traite, comme zone de production, au moins des données de la machine (104) de production et les achemine à une zone (110) de contrôle et/ou à une zone (112) de service comme zone suivante respective, en pouvant les acheminer à un réseau (150, 158) privé ou à un réseau (166) extérieur, comme l'internet.

3. Procédé suivant la revendication 2, **caractérisé en ce que** la zone (108) de production de la une commande (118) de machine peut être raccordée au moyen d'une transmission (116) de données à des commandes d'autres machines de fabrication au sein d'une installation industrielle.

4. Procédé suivant la revendication 2 ou 3, **caractérisé en ce que** la zone (108) de production rend possible au moins l'un des traitements de données suivant :
- traitement de données du plan (152) de conduite de fonctionnement (Manufactoring Execution System, MES) d'un système de gestion de fabrication,
- traitement de données (156) accumulées sur un laps de temps,
- production de protocoles (174) de production et/ou de rapports (174) de production.

5. Procédé suivant l'une des revendications 2 à 4, **caractérisé en ce que** la zone (110) de contrôle rend possible au moins l'un des traitements de données suivant :
- production d'une vue d'ensemble (160) de données d'une machine (104) de fabrication,
- détection de tendances (178),
- enregistrement de l'état (176) de fonctionnement de la machine.

6. Procédé suivant l'une des revendications 2 à 5, **caractérisé en ce que** la zone (112) de service rend possible au moins l'un des traitements de données suivant :
- traitement de données d'entretien,
- enregistrement de l'état (176) de fonctionnement de la machine,
- mise en oeuvre de télédiagnostics (180).

7. Procédé suivant l'une des revendications 3 à 6, **caractérisé en ce que** la transmission de données entre les diverses machines de fabrication d'une installation industrielle rend possible au moins une transmission de données suivante :
- données du plan (152) de conduite du fonctionnement (Manufactoring Execution System, MES) d'un système de gestion de fabrication,
- données (156) rassemblées sur un laps de temps.

8. Procédé suivant l'une des revendications 2 à 7, **caractérisé en ce que** le réseau (158) privé rend possible au moins la transmission de données suivante :
- données de production d'une vue d'ensemble (164) de données sur plusieurs machines (104) de fabrication,
- données de terminaux (162) mobiles.

9. Procédé suivant l'une des revendications 2 à 8, **caractérisé en ce que** le réseau (166) extérieur, de préférence avec inclusion du nuage, rend possible au moins la transmission de données pour :
- une planification d'entretien et/ou
- un établissement de relevés (168) et/ou de documents (168) de documentation et/ou
- une combinaison de données de machine réelles à de la documentation dans le nuage.

10. Procédé suivant l'une des revendications précédentes, **caractérisé en ce que** la diode (120) de données utilisée respectivement est formée, entre les diverses zones (108, 110, 112) avec leurs unités informatiques, d'une diode (134) laser, qui sert à la production de lumière, et d'une photodiode (142), qui sert à la détection lumineuse de la lumière produite.

11. Procédé suivant l'une des revendications précédentes, **caractérisé en ce que** les zones (110, 112) sont montées en parallèle les unes avec les autres au moins en partie, respectivement en série avec la première zone (108) rapporté au flux de données et/ou au moins en partie montées en série à partir de la première zone (108).

12. Procédé suivant l'une des revendications précédentes, **caractérisé en ce que** chaque zone (108, 110, 112) comprend, du côté de l'entrée, au moins un convertisseur (126) de protocole pour la conversion de protocole et pour le couplage d'un protocole de transmission de données pouvant être transmis au moyen des diodes (120) de données à un protocole de transmission de données pouvant être traité par la zone (108, 110, 112) et/ou, du côté de la sortie, au moins un autre convertisseur (126) de protocole pour la conversion de protocole et le couplage d'un protocole de transmission de données pouvant être traité par les zones (108, 110, 112) à un protocole de transmission de données pouvant être transmis au moyen des diodes (120) de données.

13. Procédé suivant l'une des revendications précédentes, **caractérisé en ce que** les ordinateurs, en particulier en ce qui concerne leurs matériels et/ou leurs logiciels de traitement, sont constitués pareillement et peuvent être configurés pour une utilisation conforme aux prescriptions, en particulier au moyen d'un logiciel (122, 124) d'application correspondant à une zone (108, 110, 112) respective.

14. Procédé suivant l'une des revendications précédentes, **caractérisé en ce qu'**une diode (120) de données est formée d'une unité (128) d'émission, qui fait partie d'une zone (108, 110, 112) respective, et d'une unité (136) de réception, qui fait partie d'une zone (110, 112) ayant une sécurisation des données moindre, dans lequel l'unité (128) d'émission et l'unité (136) de réception sont reliées entre elles, à l'aide d'un moyen (138) de transmission de données.

15. Procédé suivant la revendication 14, **caractérisé en ce que** l'unité (128) d'émission est constituée en diode de données d'émission, qui comprend une diode (134) laser et en particulier un multiplexeur (130) et un modulateur (132), **en ce que** l'unité (136) de réception est constituée en diode de données de réception, qui comprend une photodiode (142) et en particulier un démodulateur (144) et un démultiplexeur (146), et **en ce que** l'unité (128) d'émission et l'unité (136) de réception sont reliées entre elles par le moyen (138) de transmission de données sous la forme d'un câble (140) de guide d'onde lumineuse.

16. Machine de fabrication, qui a, comme partie constitutive intégrale, un dispositif suivant l'une des revendications précédentes.

17. Installation industrielle ayant plusieurs machines de production suivant la revendication 16.
